# EUROPÄISCHE PATENTSCHRIFT

(11) **EP 4 491 146 B1**
(45) Veröffentlichungstag und Bekanntmachung des Hinweises auf die Patenterteilung: **25.06.2025**
(21) Anmeldenummer: 23184524.9
(22) Anmeldetag: 10.07.2023
(51) Int. Cl.: A61C 8/00

(54) **CONTAINER FÜR EIN DENTALES IMPLANTAT**
CONTAINER FOR A DENTAL IMPLANT
RÉCIPIENT POUR IMPLANT DENTAIRE

(43) Veröffentlichungstag der Anmeldung: 15.01.2025
(73) Patentinhaber: Hubert Stüken GMBH & CO. KG, 31737 Rinteln (DE)
(72) Erfinder: HELLMANN, Andreas, 31848 Bad Münder (DE); GERBER, Sabrina, 31840 Hessisch Oldendorf (DE); PETERS, Jan, 31552 Rodenberg (DE)
(74) Vertreter: Brinkmann & Partner

(56) Entgegenhaltungen:
- EP-A1- 2 754 410
- CA-A1- 2 232 402
- DE-U1- 202022 100 736
- US-A- 5 368 160
- US-A- 5 558 230
- US-A1- 2011 247 947
- US-A1- 2020 000 559

## Beschreibung

Die Erfindung betrifft einen Container für ein dentales Implantat, insbesondere für die Aufbewahrung und den Transport eines dentalen Titan-Implantats.

Container der eingangs genannten Art, auch Verpackung oder Behälter genannt, sind aus dem Stand der Technik bekannt.

So zeigt z.B. die US 5,558,230 A einen Container zur Aufbewahrung eines dentalen Implantats, wobei das Implantat mit seinem einen Ende in einem Träger gehalten wird. Zusätzlich besitzt der Träger eine Öffnung zur Aufbewahrung einer Heilschraube. Eine transparente Haube sitzt dabei so über dem Träger, dass der Träger bzw. das Implantat von der Umgebung abgeschirmt ist. Die kontaminationsfreie Entnahme des Implantats erfolgt, indem die Haube abgenommen und das Implantat mithilfe eines Werkzeugs vom Träger gelöst wird. Mit demselben Werkzeug wird auch die Heilschraube entnommen.

Die US 5,368160 A offenbart ebenfalls einen Container zur Aufbewahrung eines dentalen Implantats. Das Implantat befindet sich zunächst in einem Röhrchen, das mit einer Kappe verschlossen ist. An dieser Kappe ist das Implantat zusammen mit einer Eindrehhilfe mittels einer Schraube befestigt. Das Implantat wird dann durch Abnehmen der Kappe aus dem Röhrchen entnommen und zunächst mithilfe der Kappe und anschließend mithilfe der Eindrehhilfe in den Kiefer eines Patienten geschraubt. Die Eindrehhilfe wird dann entfernt und die Schraube als Heilschraube verwendet.

In ähnlicher Weise zeigt die CA 2,232,402 A1 einen Container zur Aufbewahrung eines Implantats, wobei ein Adapter vorgesehen ist, der der temporären Verbindung zwischen dem Implantat und einem Eindrehwerkzeug dient. Der Adapter wird auf das Implantat gesteckt und das Eindrehwerkzeug dann auf den Adapter. Nachdem das Implantat eingeschraubt wurde, wird dann beim Abziehen des Eindrehwerkzeuges nur die Steckverbindung zwischen Implantat und Adapter gelöst. Die Verbindung zwischen Adapter und Eindrehwerkzeug bleibt bestehen.

Eine in der US 2020/0000559 gezeigte Aufbewahrung für ein Implantat besteht aus einer Verschlusskappe und einem Röhrchen. Das Implantat ist mit der Kappe so verbunden, dass das Implantat durch eine Drehbewegung, die z.B. mit einem entsprechenden Werkzeug durchgeführt wird, von der Kappe "abgebrochen" werden kann. Eine weitere Ausführungsform sieht zusätzlich eine Führungshilfe für die Entnahme vor.

Bekannt ist zudem eine in der DE 20 2022 100 736 U1 gezeigte Verpackung für insbesondere ein medizinisches Produkt, die im Wesentlichen aus einem ersten Verpackungselement und einem zweiten Verpackungselement besteht, zwischen denen das medizinische Produkt eingespannt ist. Das erste Verpackungselement weist dazu einen wannenförmigen Aufnahmeraum mit einem Aufnahmeboden und einer Wandung auf. Das zweite Verpackungselement weist einen Verformungsbereich und einen Steckbereich auf. Das zweite Verpackungselement ist so in das erste Verpackungselement eingesetzt, dass das medizinische Produkt zwischen Aufnahmeboden des ersten Verpackungselements und Verformungsbereich des zweiten Verpackungselements elastisch eingespannt ist.

Im bestimmungsgemäßen Verwendungsfall dienen Container der eingangs genannten Art der Beherbergung von dentalen Titan-Implantaten, wobei ein Container typischerweise ein dentales Titan-Implantat aufnimmt, und zwar zum Zwecke der Aufbewahrung und/oder des Transports. Dabei stellt der Container sicher, dass eine ungewollte Kontamination des vom Container aufgenommenen Titan-Implantats sicher unterbunden ist. Zudem dient der Container dazu, im Transportfall eine Beschädigung des Titan-Implantats durch Bewegung zu verhindern.

Dentale Titan-Implantate verfügen aus einem aus Titan gebildeten Schaft, der im bestimmungsgemäßen Verwendungsfall eine Zahnkrone trägt. Es ist üblich, dass für die Aufbewahrung eines solchen Implantats bzw. für einen Transport desselben solche Container verwendet werden, die innenseitig, d. h. implantatseitig mit einer Schicht aus Titan ausgerüstet sind, insbesondere in den zur Abstützung des Implantats vorgesehenen Kontaktbereichen. Alternativ zu einer solchen "Trocken"-Lagerung des Implantats kann eine "Flüssigkeits"-Lagerung vorgesehen sein. In diesem Fall kommen zumeist aus Kunststoff gebildete Container zum Einsatz, die mit einer Flüssigkeit gefüllt sind, die das vom Container aufgenommene Implantat umspült. Eine Titaninnenbeschichtung ist in diesem Fall ob der "Flüssigkeits"-Lagerung oftmals nicht vorgesehen.

Obgleich sich vorbeschriebene Container für die Aufbewahrung und den Transport eines dentalen Titan-Implantats im alltäglichen Praxiseinsatz bewährt haben, besteht Verbesserungsbedarf. Es ist insbesondere angestrebt, bei gleichzeitiger Sicherstellung einer kontaminationsfreien Implantatlagerung eine vereinfachte und damit vorzugsweise auch preisgünstigere Containerherstellung zu ermöglichen. Es ist deshalb die **Aufgabe** der Erfindung, einen Container der eingangs genannten Art konstruktiv dahingehend weiterzuentwickeln, dass bei gleichzeitiger Sicherstellung einer implantatgerechten Aufbewahrung bzw. eines implantatgerechten Transports eine vereinfachte und vorzugsweise auch kostengünstigere Herstellung ermöglicht ist.

Zur **Lösung** dieser Aufgabe wird ein Container nach Anspruch 1 vorgeschlagen.

Der erfindungsgemäße Container ist zweiteilig ausgebildet und verfügt über einen ersten Hülsenkörper einerseits und einen zweiten Hülsenkörper andererseits. Beide Hülsenkörper sind im Querschnitt jeweils kreisförmig ausgebildet. Im endmontierten Zustand ist der erste Hülsenkörper vom zweiten Hülsenkörper zumindest teilweise aufgenommen, sodass der erste Hülsenkörper auch als Innenhülse und der zweite Hülsenkörper auch als Außenhülse bezeichnet werden kann.

Die beiden Hülsenkörper sind jeweils tiefgezogen ausgebildet, liegen mithin als tiefgezogene Teile vor. Es ist so in vorteilhafter Weise eine preisgünstige Massenherstellung der Hülsenkörper ermöglicht, was eine insgesamt preisgünstige Containerherstellung gewährleistet.

Im endmontierten Zustand des Containers sind die beiden einen Container bildenden Hülsenkörper miteinander verbunden, und zwar durch Verpressen. Es findet mithin eine rein mechanische Verbindung der beiden Hülsenkörper statt, wobei aufgrund des Verpressens im endmontierten Zustand sowohl Form- als auch Kraftschluss gegeben sind. Eine dauerhaft sichere Verbindung der beiden Hülsenkörper ist so gewährleistet. Dabei besteht gegenüber einem Verschweißen oder einem Verkleben der beiden Hülsenkörper der zusätzliche Vorteil eines vergleichsweise einfach und damit preisgünstig durchzuführenden Verbindungsprozesses. Auch aus diesem Grunde erweist sich der erfindungsgemäße Container als besonders betriebswirtschaftlich in der Herstellung.

Von Vorteil des Verbindens der beiden Hülsenkörper durch Verpressen ist ferner, dass im bestimmungsgemäßen Verwendungsfall eine finale Sterilisation zur Erzielung einer wunschgemäßen biologischen Sauberkeit in einfacher Weise und ohne Weiteres durchgeführt werden kann, und dies ohne eine mögliche Beeinträchtigung der Hülsenkörper-Verbindung, da diese infolge eines Verpressens ohne Hilfs- und/oder Ergänzungsstoffe ausgebildet ist.

Die beiden Hülsenkörper sind des Weiteren erfindungsgemäß nach dem Baukastenprinzip miteinander kombiniert. Nach dem "Baukastenprinzip" im Sinne der Erfindung bedeutet, dass herstellerseitig eine Mehrzahl von in ihren geometrischen Abmessungen jeweils unterschiedlich ausgebildete Hülsenkörper zur Verfügung stehen, die zur Ausbildung eines Containers mit wunschgemäßen Außen- bzw. Innenabmessungen wahlweise miteinander kombiniert werden können. So stehen beispielsweise in ihren Abmessungen sowohl fünf oder mehr unterschiedlich ausgebildete Innenhülsen als auch fünf oder mehr unterschiedlich ausgebildete Außenhülsen zur Verfügung. Dabei kann ein und dieselbe Außenhülse mit unterschiedlichen Innenhülsen bzw. ein und dieselbe Innenhülse mit unterschiedlichen Außenhülsen kombiniert werden, und dies herstellerseitig wahlweise. Es ist so in einfacher und damit preisgünstiger Weise gestattet, Container bereitzustellen, die der Aufnahme unterschiedlich groß ausgebildeter Implantate dienen. Der modulartige Aufbau des erfindungsgemäßen Containers gestattet es mithin konstruktiv, eine große Bandbreite an in ihrer geometrischen Ausgestaltung unterschiedlich ausgebildeten Implantaten gleichermaßen abdecken zu können. In einem ersten Schritt werden zu diesem Zweck herstellerseitig einerseits Außenhülsen und andererseits Innenhülsen hergestellt. In einem zweiten Schritt werden dann Innenhülsen mit Außenhülsen kombiniert und durch Verpressen miteinander verbunden, wobei infolge der Verbindung einer Innenhülse mit einer Außenhülse ein erfindungsgemäßer Container entsteht.

Die erfindungsgemäße Ausgestaltung zeichnet sich einerseits dadurch aus, dass es sich bei den Hülsenkörpern jeweils um tiefgezogene Teile handelt, dass die Hülsenkörper nach dem Baukastenprinzip miteinander kombiniert sind und dass die beiden Hülsenkörper durch Verpressen miteinander verbunden sind sowie andererseits dadurch, dass diese drei vorgenannten Teilaspekte synergetisch in der Weise miteinander zusammenwirken, dass in ihrer Kombination eine über die Teilaspekte hinausgehende vereinfachte Herstellung erreicht ist. Insbesondere der modulare Aufbau des Containers aus zwei miteinander verbundenen Hülsenkörpern macht es möglich, durch einfaches Verpressen zweier Hülsenkörper einen in seinen geometrischen Abmessungen wahlweise ausgebildeten Container bereitzustellen, wobei sich die geometrischen Containerabmessungen in Abhängigkeit der geometrischen Abmessungen der gewählten Hülsenkörper ergeben. Dabei können überhaupt nur deshalb in ihren geometrischen Abmessungen unterschiedliche Hülsenkörper in einfacher Weise auch massenhaft bereitgestellt werden, weil diese durch Tiefziehen hergestellt sind. Insofern wirken alle drei vorgenannten Teilaspekte der erfindungsgemäßen Ausgestaltung synergetisch zusammen.

Die einzelnen Hülsenkörper sind vorzugsweise jeweils einstückig ausgebildet und bestehen aus Titan, vorzugsweise Reintitan Grad 1. Einerseits ist so die erfindungsgemäße Ausgestaltung tiefgezogener Hülsenkörper ermöglicht, andererseits ist auch im Falle einer "Trocken"-Lagerung eine implantatgerechte, d. h. kontaminationsfreie Aufbewahrung eines Implantats durch den Container ermöglicht.

In diesem Zusammenhang ist ferner von Vorteil, dass die einzelnen Hülsenkörper jeweils ein vergleichsweise geringes Gewicht aufweisen, was insbesondere einen vereinfachten preisgünstigeren Massentransport von Hülsenkörpern ermöglicht.

Gemäß einem weiteren Merkmal der Erfindung ist vorgesehen, dass die beiden Hülsenkörper jeweils einen Kontaktabschnitt bereitstellen, wobei die beiden Kontaktabschnitte unter Ausbildung eines Presssitzes in Berührungskontakt aneinander anliegen.

Ein jeder der beiden Hülsenkörper stellt einen Kontaktabschnitt bereit. Im endmontierten Zustand liegen diese beiden Kontaktabschnitte der beiden Hülsenkörper in Berührungskontakt aneinander an. Dabei ist der Außendurchmesser des Kontaktbereichs des als Innenhülse dienenden Hülsenkörpers mit Bezug auf den Innendurchmesser des Kontaktbereichs des als Außenhülse dienenden Hülsenkörpers auf Übermaß gefertigt, sodass im Moment des Zusammenfügens der beiden Hülsenkörper ein Presssitz ausgebildet wird, und zwar im Bereich der beiden aneinander anliegenden Kontaktabschnitte. Die beiden Kontaktabschnitte der Hülsenkörper bilden mithin im endmontierten Zustand den Verbindungsbereich aus, über welchen die beiden Hülsenkörper miteinander gekoppelt sind. Dabei ist die Verbindung rein mechanisch, da infolge des Verpressens der beiden Hülsenkörper ein Presssitz geschaffen ist. Diese Art der Verbindung ist in einfacher Weise auszubilden, insbesondere mit Bezug auf die Ausgestaltung der beiden Hülsenkörper als Tiefziehteile. Es wird zudem eine dauerhaft sichere Verbindung geschaffen, die auch temperaturstabil und flüssigkeitsdicht ist. Da zur Verbindungsausgestaltung keine Zusatzstoffe benötigt werden, ist der endfertig montierte Container darüber hinaus in einfacher Weise recycelbar.

Gemäß einem weiteren Merkmal der Erfindung ist vorgesehen, dass der erste Hülsenkörper einen Kragen aufweist, an dem der zweite Hülsenkörper stirnseitig anliegt.

Im endmontierten Zustand ist der erste Hülsenkörper vom zweiten Hülsenkörper zumindest zum Teil aufgenommen, wobei der zweite Hülsenkörper stirnseitig an einem Kragen des ersten Hülsenkörpers anliegt. Diese Ausgestaltung erbringt insbesondere den Vorteil, dass die beiden Hülsenkörper zwecks endfertiger Montage bis auf Anschlag ineinandergeschoben werden können. Sobald der zweite Hülsenkörper stirnseitig am Kragen des ersten Hülsenkörpers anschlägt, d. h. zu liegen kommt, ist eine bestimmungsgemäße Endposition der beiden Hülsenkörper relativ zueinander erreicht und der Container ist endmontiert. Dabei kann die Verbindungsfügung in einfacher Weise kraft- und/oder weggesteuert durchgeführt werden, sodass reproduzierbare Verbindungsprozesse durchgeführt werden können. Der erste Hülsenkörper wird quasi einfach bis auf Anschlag in den zweiten Hülsenkörper eingeführt. Dabei bildet sich aufgrund der Übermaßausgestaltung des ersten Hülsenkörpers in schon vorbeschriebener Weise eine Pressverbindung im Bereich der beiden Kontaktabschnitte der Hülsenkörper aus. Es ist so im Ergebnis eine einfache und sichere Montage ermöglicht, die zudem automatisierbar ist und auch sehr hohe Taktraten zulässt.

Gemäß einem weiteren Merkmal der Erfindung ist vorgesehen, dass der Kragen einen den Außendurchmesser des zweiten Hülsenkörpers übersteigenden Außendurchmesser aufweist. Gemäß dieser besonderen Ausführungsform überragt der Kragen im endmontierten Zustand den vom zweiten Hülsenkörper bereitgestellten Außenmantel. Der Kragen des ersten Hülsenkörpers steht mithin randseitig, d. h. in radialer Richtung über dem zweiten Hülsenkörper hinaus vor.

Diese Ausgestaltung erweist sich insbesondere als vorteilhaft, wenn der Container zwecks einer "Flüssigkeits"-Lagerung von einem die Flüssigkeit beherbergenden Glas- oder Kunststoffrohr aufgenommen ist. In diesem Fall liegt der Container nämlich mit seinem Kragen des ersten Hülsenkörpers stirnseitig des Glas- oder Kunststoffrohres an. Es ist so eine definierte Lage des Containers in Relation zum Glas- oder Kunststoffrohr sichergestellt. Zur Vermeidung eines ungewollten Flüssigkeitsverlusts kann das Glas- oder Kunststoffrohr zudem mit einer Verschlusskappe ausgerüstet sein, die dann nicht nur das Glas- oder Kunststoffrohr, sondern auch den davon aufgenommenen Container oberseitig abdeckt bzw. verschließt.

Zwecks Aufnahme des erfindungsgemäßen Containers durch ein Glas- oder Kunststoffrohr ist der Container öffnungsseitig des Glas- oder Kunststoffrohrs in dieses einzuführen. Der Gewichtskraft folgend kann der Container sodann in Längsrichtung des Glas- oder Kunststoffrohrs nach unten bewegt bzw. verfahren werden, bis der als umgebördelte Randkante ausgebildete Kragen des ersten Hülsenkörpers des Containers stirnseitig des Glas- oder Kunststoffrohrs zu liegen kommt. Eine gesonderte Ausrichtung und/oder Positionierung des Containers in Relation zum Glas- oder Kunststoffrohr ist verwenderseitig in vorteilhafter Weise nicht erforderlich.

Gemäß einem weiteren Merkmal der Erfindung ist vorgesehen, dass der erste Hülsenkörper einen Stützabschnitt mit einen im Vergleich zum Kontaktabschnitt verminderten Außendurchmesser aufweist. Im endmontierten Zustand dient dieser Stützabschnitt der Abstützung eines vom Container bestimmungsgemäß aufgenommenen Implantats. Gemäß der erfindungsgemäßen Ausgestaltung, dass die beiden Hülsenkörper nach dem Baukastenprinzip miteinander kombiniert sind, stehen eine Mehrzahl von ersten Hülsenkörpern mit jeweils im Durchmesser unterschiedlich ausgebildeten Stützabschnitten wahlweise zur Verfügung. Diese können verwenderseitig bzw. herstellerseitig mit einem zweiten oder auch mit mehreren zweiten Hülsenkörpern kombiniert werden, sodass nach Länge und Durchmesser unterschiedlich ausgebildete Implantate gleichsam sicher von einem erfindungsgemäß ausgebildeten Container aufgenommen werden können. Dabei ist der vom ersten Hülsenkörper bereitgestellte Stützabschnitt ein erster Abschnitt, an dem ein Implantat im bestimmungsgemäßen Verwendungsfall sicher zur Abstützung bzw. Anlage gelangt.

Gemäß einem weiteren Merkmal der Erfindung ist vorgesehen, dass der erste Hülsenkörper einen als Schulter ausgebildeten Übergangsabschnitt zwischen dem Kontaktabschnitt und dem Stützabschnitt aufweist. Auch dieser als Schulter ausgebildete Übergangsabschnitt kann im Verwendungsfall des Containers zur Abstützung eines vom Container aufgenommenen Implantats dienen. Dabei liegt das Implantat mit seinem Kopfabschnitt vorzugsweise in Linienberührung entweder an dem als Schulter ausgebildeten Übergangsabschnitt oder an dem Stützabschnitt an.

Der erste Hülsenkörper verfügt mithin insgesamt über einen Kontaktabschnitt, einen daran einendseitig angeordneten Kragen sowie einen anderendseitig daran angeordneten Übergangsabschnitt, wobei dem Übergangsabschnitt dem Kontaktabschnitt gegenüberliegend ein Stützabschnitt nachfolgt. Dabei weist der Stützabschnitt einen im Vergleich zum Kontaktabschnitt verminderten Außendurchmesser auf, wohingegen der Kragen einen im Vergleich zum Kontaktabschnitt größeren Außendurchmesser aufweist.

Gemäß einem weiteren Merkmal der Erfindung ist vorgesehen, dass der zweite Hülsenkörper einen einendseitig offen ausgebildeten Hohlzylinder und einen den Hohlzylinder anderendseitig verschließenden Bodenabschnitt aufweist. Im endmontierten Zustand ist der erste Hülsenkörper in dem vom Hohlzylinder des zweiten Hülsenkörpers bereitgestellten Volumenraum angeordnet, d. h. der erste Hülsenkörper ist vom zweiten Hülsenkörper aufgenommen, und zwar bis auf den vom ersten Hülsenkörper bereitgestellten Kragen, mithin zumindest teilweise.

Im endmontierten Zustand steht das vom Container aufgenommene Implantat mit dem Bodenabschnitt des zweiten Hülsenkörpers in Berührungskontakt. Der zweite Bodenabschnitt trägt mithin das Implantat, wobei das Implantat fußseitig am Bodenabschnitt anliegt. In schon vorbeschriebener Weise wird das Implantat kopfseitig vom Stützabschnitt des ersten Hülsenkörpers abgestützt, sodass im Ergebnis eine Art 2-Punkt-Aufnahme des Implantats durch den Container gegeben ist. Einerseits liegt das Implantat mit seinem Fußabschnitt am Bodenabschnitt des zweiten Hülsenkörpers auf und andererseits ist das Implantat durch den Stützabschnitt des ersten Hülsenkörpers abgestützt, an dem es im bestimmungsgemäßen Verwendungsfall zum in einer Linienberührung anliegt. Damit ist im Ergebnis eine positionssichere und -genaue Unterbringung eines Implantats innerhalb des erfindungsgemäßen Containers sichergestellt. Insbesondere ein unbeabsichtigtes Hin- und Herbewegen des Implantats innerhalb des Containers ist unterbunden.

Gemäß einem weiteren Merkmal der Erfindung ist vorgesehen, dass der Bodenabschnitt eine mittig zum Hohlzylinder ausgebildete Durchgangsöffnung aufweist. Diese Durchgangsöffnung erfüllt in synergetischer Weise zwei Vorteile. Zum einen dient sie als zusätzliche positionssichere Abstützung des vom Container aufgenommenen Implantats, indem das Implantat mit seinem Fußabschnitt in die Durchgangsöffnung eingreift. Zum anderen dient die Durchgangsöffnung dazu, im Falle einer "Flüssigkeits"-Lagerung die zur Lagerung vorgesehene Flüssigkeit in den vom Container umgebenden Innenraum einströmen lassen zu können. Die Durchgangsöffnung dient mithin als Eingangs- und Ausgangsöffnung für vom Container im Falle einer "Flüssigkeits"-Lagerung aufzunehmende Flüssigkeit. Der erfindungsgemäße Container ist mithin gleichsam dafür geeignet und bestimmt, eine "Trocken"-Lagerung als auch eine "Flüssigkeits"-Lagerung zu ermöglichen.

Gemäß einem weiteren Merkmal der Erfindung ist vorgesehen, dass der Bodenabschnitt zur Durchgangsöffnung beabstandete Durchgangsbohrungen aufweist. Diese Durchgangsbohrungen können dazu dienen, zur fachgerechten Implantierung eines vom Container beherbergten Implantats benötigte Implantatschrauben bereitzustellen. Herstellerseitig kann eine Bestückung dieser Durchgangsbohrungen mit entsprechenden Implantatschrauben erfolgen, die dann in späterem Verwendungsfall bei der Implantateinbringung zur Verfügung stehen. Durch das Vorsehen der Durchgangsbohrungen wird mithin eine Hilfestellung insofern erreicht, als dass am Container selbst im späteren Einbringungsfall des Implantats unter Umständen benötigte Schrauben angebracht sind, d. h. angeordnet und zusammen mit dem Implantat zur Verfügung gestellt werden können. Eine separate Bereitstellung etwaiger Schrauben ist dann in vorteilhafter Weise nicht erforderlich.

Gemäß einem weiteren Merkmal der Erfindung ist vorgesehen, dass der Hohlzylinder eine umlaufende Sicke aufweist. Diese Sicke ist vorzugsweise in unmittelbarer Nähe zum Bodenabschnitt ausgebildet, und zwar mit Bezug auf die Längserstreckung des Hülsenkörpers. Die Ausgestaltung der Sicke bringt im Wesentlichen zwei Vorteile. Zum einen erfolgt durch die Ausgestaltung der Sicke eine Versteifung des Hülsenkörpers im Bereich des Bodenabschnitts. Dies erbringt eine zusätzliche Hülsenkörperstabilität, was ungewollten Verformungen des Containers auch im Falle einer mechanischen Kraftbeaufschlagung entgegenwirkt. Zum anderen ermöglicht es die Sicke, einen aus einem weich-elastischem Kunststoffmaterial gebildeten Ring positionssicher am zweiten Hülsenkörper anzuordnen. Und so ist gemäß einem weiteren Merkmal der Erfindung vorgesehen, dass in die Sicke ein Ring aus einem weich-elastischem Kunststoffmaterial eingesetzt ist, beispielsweise ein aus Silikon gebildeter O-Ring. Dieser wird in schon vorbeschriebener Weise im endmontierten Zustand durch die Sicke positionsgenau und -sicher am zweiten Hülsenkörper gehalten.

Der Vorteil der Anordnung eines aus einem weich-elastischen Kunststoffmaterial gebildeten Rings in der Sicke des zweiten Hülsenkörpers besteht insbesondere darin, dass bei einer Unterbringung des Containers in einem Glas- oder Kunststoffrohr beispielsweise zum Zwecke der "Flüssigkeits"-Lagerung ungewollte Kontaktgeräusche zwischen Container einerseits und Glas- oder Kunststoffrohr unterbunden sind. Denn der erfindungsgemäße Container liegt in diesem Fall einerseits mit seinem Kragen stirnseitig am Glas- oder Kunststoffrohr an und andererseits erfolgt eine bodenabschnittnahe Abstützung des Containers gegenüber dem Glas- oder Kunststoffrohr unter Zwischenschaltung des von der Sicke aufgenommenen Rings. Es stehen mithin nicht der Container und das Glas- oder Kunststoffrohr in direktem Berührungskontakt, sondern unter Zwischenordnung des dämpfend wirkenden Kunststoffrings.

Gemäß einem weiteren Merkmal der Erfindung ist vorgesehen, dass der Bodenabschnitt eine Verdrehsicherung bereitstellt. Die Verdrehsicherung stellt eine Art Codierung dar, die zweierlei erbringt. Es kann zum einen eine positionsgewünschte Ausrichtung des vom Container aufzunehmenden Implantats in Relation zum Container selbst stattfinden. Zum anderen ist durch die Verdrehsicherung erreicht, dass sich das Implantat nicht ungewollt um die Hochachse des Containers bzw. des Implantats verdrehen kann. Eine solche verdrehsichere Anordnung des Implantats innerhalb des Containers ist bevorzugt, wenn zur Aufnahme des Implantats kopfseitig ein Werkzeug durch Verdrehen auf das Implantat aufgesetzt wird. Die Verdrehsicherung stellt in diesem Fall sicher, dass sich das Implantat beim Aufsetzen des Werkzeugs nicht ungewollt in Relation zum Container verdreht.

Gemäß einem weiteren Merkmal der Erfindung ist in diesem Zusammenhang vorgesehen, dass die Durchgangsöffnung zur Ausbildung einer Verdrehsicherung umfangsseitig eine Einkerbung aufweist. Die Durchgangsöffnung weist mithin aufgrund der vorgesehenen Einkerbung eine von der Kreisform abweichende Außenkontur auf. Das Implantat verfügt über eine entsprechende Gegenkontur, sodass bei einem bestimmungsgemäßen Einsetzen des Fußabschnitts des Implantats in die Durchgangsöffnung in schon vorbeschriebener Weise eine Verdrehsicherung erreicht ist.

Mit der erfindungsgemäßen Ausgestaltung wird insgesamt ein in einfacher und deshalb preisgünstiger Weise herstellbarer Container für die Aufbewahrung und den Transport eines dentalen Titan-Implantats zur Verfügung gestellt. Der Container verfügt über zwei aus Titan bestehende Hülsenkörper, die als Tiefziehteile ausgebildet sind. Im endmontierten Zustand sind die beiden Hülsenkörper mechanisch miteinander durch Verpressen verbunden, wobei ein definierter Presssitz zwischen den beiden Hülsenkörpern ausgebildet ist. Zudem ist ein Modulaufbau vorgeschlagen, der es ermöglicht, dass die beiden Hülsenkörper nach dem Baukastenprinzip miteinander kombiniert sind. Es stehen mithin in ihren geometrischen Abmessungen unterschiedlich ausgebildete Hülsenkörper zur Verfügung, die zur Ausbildung eines entsprechenden Containers wahlweise miteinander kombiniert werden können. Auch hierdurch wird eine vereinfachte und damit preisgünstige Herstellung ermöglicht, wobei gleichzeitig sichergestellt ist, dass konstruktionsbedingt in den geometrischen Abmessungen unterschiedliche Containergrößen gleichermaßen einfach bereitgestellt werden können, sodass die erfindungsgemäße Konstruktion die Möglichkeit bietet, an unterschiedliche Implantatgrößen angepasste Container wahlweise zur Verfügung stellen zu können.

Weitere Merkmale und Vorteile der Erfindung ergeben sich aus der nachfolgenden Beschreibung anhand der Figuren. Dabei zeigen
- Fig. 1: in schematischer Perspektivansicht einen erfindungsgemäßen Container gemäß einer ersten Ausführungsform;
- Fig. 2: in schematischer Perspektivansicht einen erfindungsgemäßen Container gemäß einer zweiten Ausführungsform;
- Fig. 3: in einer weiteren schematischen Perspektivansicht den erfindungsgemäßen Container nach Figur 2;
- Fig. 4: in einer geschnittenen Seitenansicht den erfindungsgemäßen Container nach Figur 1;
- Fig. 5: in einer geschnittenen Perspektivansicht den erfindungsgemäßen Container nach Figur 1;
- Fig. 6: in einer weiteren geschnittenen Darstellung den erfindungsgemäßen Container nach Figur 1 und
- Fig. 7: in einer schematischen Schnittdarstellung den erfindungsgemäßen Container nach Figur 1 mit einem davon aufgenommenen Implantat.

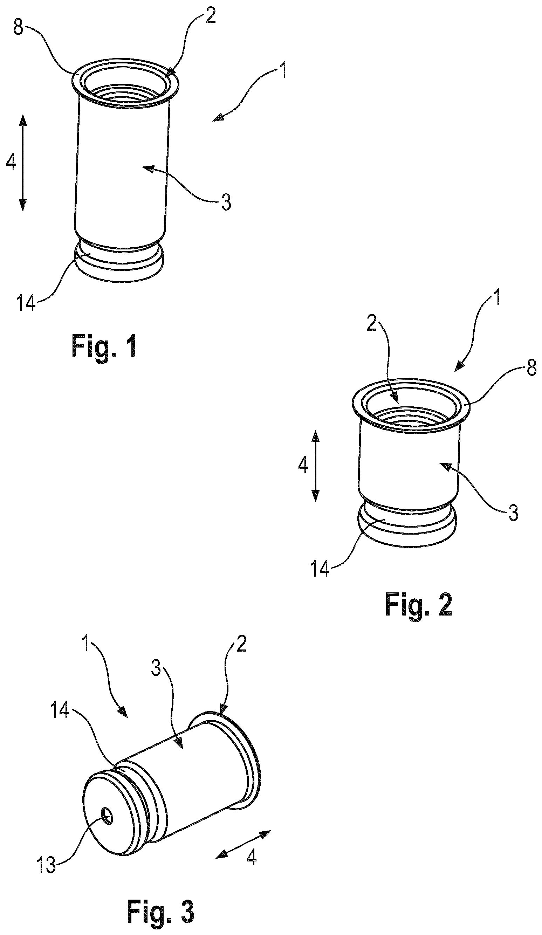

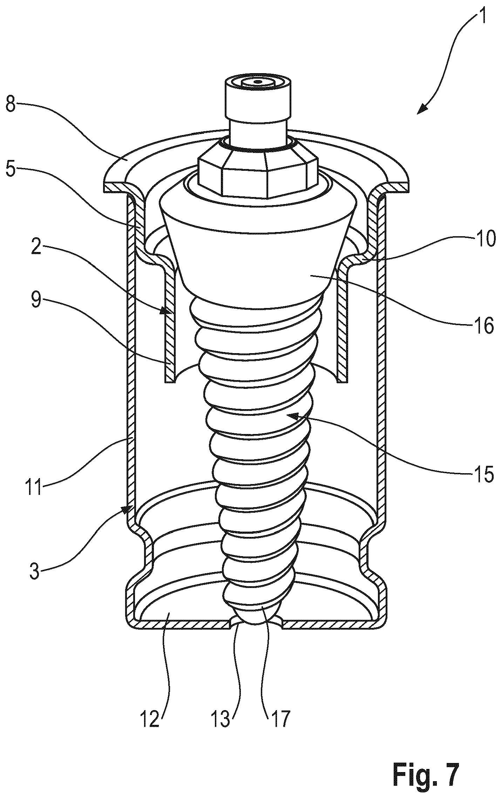

Die Figuren 1 bis 6 lassen in einer Zusammenschau einen erfindungsgemäßen Container 1 erkennen. Dieser dient der Aufbewahrung und/oder dem Transport eines dentalen Titan-Implantats 15, im Folgenden auch nur Implantat genannt, wie dies beispielhaft in Figur 7 dargestellt ist.

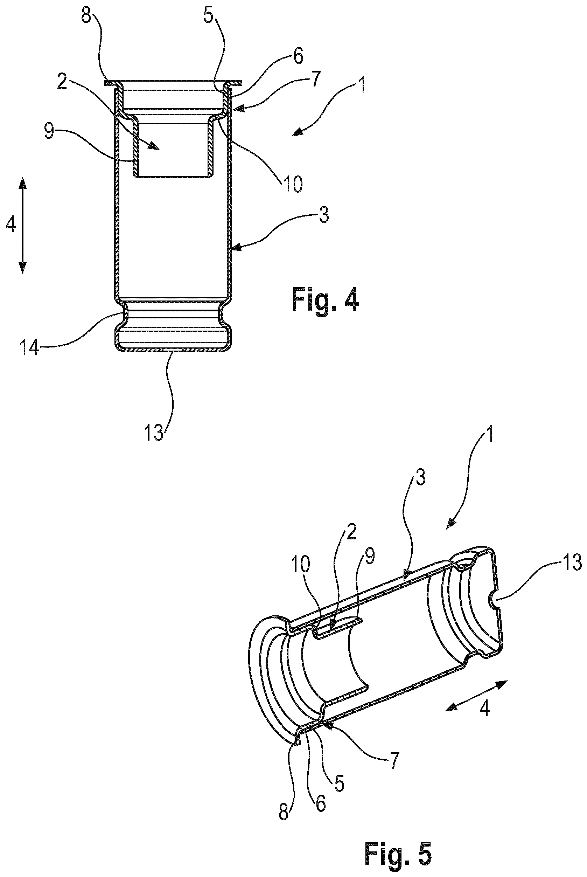

Der Container 1 verfügt über einen ersten Hülsenkörper 2 und einen zweiten Hülsenkörper 3. Im endmontierten Zustand ist der erste Hülsenkörper 2 vom zweiten Hülsenkörper 3 zumindest zum Teil aufgenommen, wie sich dies insbesondere aus den Darstellungen nach den Figuren 4, 5 und 6 ergibt. Da der erste Hülsenkörper 2 im endmontierten Zustand vom zweiten Hülsenkörper 3 aufgenommen ist, kann der erste Hülsenkörper 2 auch als Innenhülse und der zweite Hülsenkörper 3 auch als Außenhülse bezeichnet werden. Beide Hülsenkörper 2 und 3 sind im Querschnitt jeweils kreisförmig ausgebildet.

Wie sich ferner insbesondere aus einer Darstellung nach den Figuren 4, 5 und 6 ergibt, übersteigt die Längserstreckung 4 des zweiten Hülsenkörpers 3 die Längserstreckung 4 des ersten Hülsenkörpers 2. Der erste Hülsenkörper 2 ist mithin in Höhenrichtung des Containers 1 kürzer ausgeführt als der zweite Hülsenkörper 3.

Beide Hülsenkörper 2 und 3 bestehen jeweils aus Titan, vorzugsweise Titan-Grad 1, und sind als tiefgezogene Teile ausgebildet. Die beiden Hülsenkörper 2 und 3 stellen mithin tiefgezogene Titanhülsen dar.

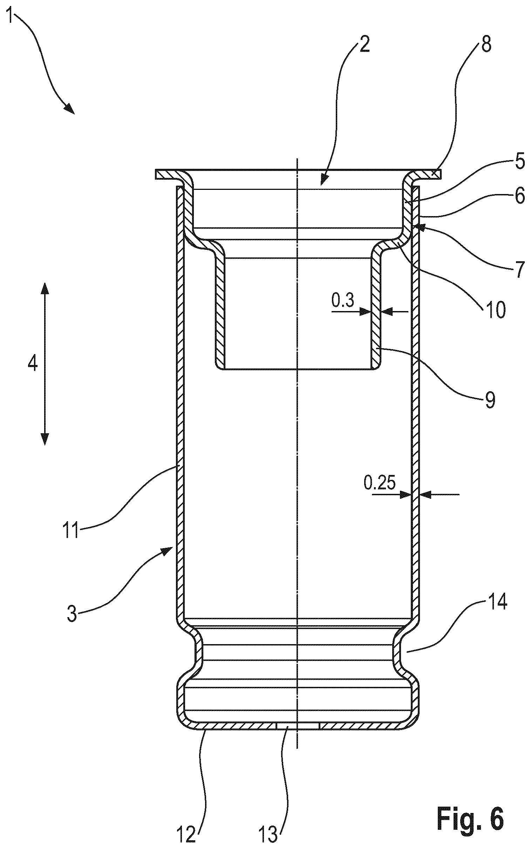

Zur Verbindung der beiden Hülsenkörper 2 und 3 ist ein Presssitz 7 vorgesehen. Zu diesem Zweck verfügt ein jeder Hülsenkörper 2 und 3 über einen Kontaktabschnitt 5 bzw. 6, wobei der erste Hülsenkörper 2 den Kontaktabschnitt 5 und der zweite Hülsenkörper 3 den Kontaktabschnitt 6 bereitstellt. Im endmontierten Zustand liegen die beiden Kontaktabschnitte 5 und 6 unter Ausbildung des Presssitzes 7 in Berührungskontakt aneinander an, wie dies beispielsweise die Darstellung nach Figur 6 erkennen lässt.

Der erste Hülsenkörper 2 weist einen Kragen 8 auf, an dem der zweite Hülsenkörper 3 stirnseitig anliegt. Dabei überragt der Kragen 8 den Außendurchmesser des zweiten Hülsenkörpers 3 in radialer Richtung. Der Kragen 8 hat mithin einen Außendurchmesser, der den Außendurchmesser des zweiten Hülsenkörpers 3 übersteigt.

Der Kragen 8 des ersten Hülsenkörpers 2 dient insbesondere zweierlei Zwecken. Zum einen dient er bei der Montage des Containers 1 als Anschlag für den zweiten Hülsenkörper 3. Zur Verbindungsausbildung werden der erste Hülsenkörper 2 und der zweite Hülsenkörper 3 miteinander verpresst, wobei eine endmontierte Lage der beiden Hülsenkörper erreicht ist, wenn der zweite Hülsenkörper 3 stirnseitig auf Anschlag am Kragen 8 des ersten Hülsenkörpers 2 zu liegen kommt.

Da der Kragen 8 in radialer Richtung den Außendurchmesser des zweiten Hülsenkörpers 3 übersteigt, dient der Kragen 8 ferner als Abstützung des Containers 1 gegenüber einem beispielsweise aus Glas oder Kunststoff gebildeten Rohr oder Röhrchen, in das der Container 1 zwecks einer "Flüssigkeits"-Lagerung des Implantats 15 eingesetzt ist.

Der erste Hülsenkörper 2 stellt neben dem Kontaktabschnitt 5 und dem Kragen 8 ferner einen Stützabschnitt 9 bereit. Dabei dient der Übergangsbereich zwischen dem Kontaktabschnitt 5 und dem Stützabschnitt 9 als Schulter 10. Im endmontierten Zustand liegt ein vom Container 1 bestimmungsgemäß aufgenommenes Implantat 15 mit seinem Kopfabschnitt 16 entweder an der Schulter 10 oder an dem Stützabschnitt 9 des ersten Hülsenkörpers 2 an, wie sich dies insbesondere aus der Darstellung nach Figur 7 ergibt.

Der zweite Hülsenkörper 3 verfügt über einen einseitig offenen Hohlzylinder 11 einerseits und einen Bodenabschnitt 12 andererseits, der den Hohlzylinder 11 einendseitig verschließt. Dieser Sachzusammenhang ergibt sich insbesondere aus einer Zusammenschau der Figuren 3, 5 und 6.

Der Bodenabschnitt 12 ist mit einer Durchgangsöffnung 13 ausgerüstet. Diese Durchgangsöffnung 13 dient der lagesicheren Aufnahme eines Fußabschnitts 17 des Implantats 15. Dies ergibt sich ebenfalls aus der Darstellung nach Figur 7.

Wie Figur 7 insgesamt zu entnehmen ist, stützt sich ein vom Container 1 bestimmungsgemäß aufgenommenes Implantat 15 einerseits an der Schulter 10 bzw. dem Stützabschnitt 9 des ersten Hülsenkörpers 2 ab und andererseits liegt es mit seinem Fußabschnitt 17 am Bodenabschnitt 12 an, wobei es zur verbesserten Lagesicherung die vom Bodenabschnitt 12 bereitgestellte Durchgangsöffnung 13 durchragt.

Wie eine Zusammenschau der Figuren ferner erkennen lässt, ist der Hohlzylinder 11 außenseitig mit einer umlaufenden Sicke 14 ausgerüstet. In diese Sicke 14 kann im Bedarfsfall ein aus einem weich-elastischem Kunststoffmaterial ausgebildeter Ring lagesicher eingesetzt sein. Dieser dient der Abstützung des Containers 1 gegenüber einem den Container 1 aufnehmenden Glas- oder Kunststoffrohr, sodass Kontaktgeräusche aufgrund eines direkten Kontakts dem zweiten Hülsenkörpers 3 und dem Glas- oder Kunststoffrohr vermieden ist.

Die beiden Hülsenkörper 2 und 3 könne nach dem Baukastenprinzip wahlweise miteinander kombiniert werden. Es stehen zu diesem Zweck eine Mehrzahl sowohl von ersten Hülsenkörpern 2 als auch von zweiten Hülsenkörpern 3 bereit, die sich jeweils in ihren geometrischen Abmessungen voneinander unterscheiden. Nach dem "Baukastenprinzip" im Sinne der Erfindung bedeutet also, dass wahlweise ein erster Hülsenkörper 2 mit einer Mehrzahl von unterschiedlichen zweiten Hülsenkörpern 3 kombinierbar ist und umgekehrt. Je nach Größe des später aufzunehmenden Implantats 15 kann mithin eine konkrete Größenabstimmung durch eine entsprechende Auswahl der miteinander zu kombinierenden Hülsenkörpern 2 und 3 stattfinden.

Die Figuren 1 und 2 zeigen unterschiedlich ausgebildete Container 1, wobei die beiden Ausführungsformen sowohl eine unterschiedliche Erstreckung in Längsrichtung 4 aufweisen, als auch einen voneinander abweichenden Außendurchmesser. Hinsichtlich ihres konstruktiven Aufbaus sind beide Container 1 nach den Figuren 1 und 2 aber identisch ausgebildet.

Geometrisch variable Größen können insbesondere die Längserstreckung des Hohlzylinders 11, die Längserstreckung des Stützabschnitts 9, die Außen- und die Innendurchmesser der Kontaktabschnitte 5 und 6 sowie der Innendurchmesser des Stützabschnitts 9 sein. Die Länge des zweiten Hülsenkörpers 3 in Längserstreckungsrichtung 4 kann beispielsweise zwischen 5 mm und 20 mm, noch mehr bevorzugt zwischen 10 und 15 mm betragen. Die Erstreckung des ersten Hülsenkörpers 2 in Längserstreckungsrichtung 4 beträgt vorzugsweise zwischen 2 mm und 7 mm, noch mehr bevorzugt zwischen 3 mm und 5 mm. Der Innendurchmesser des Stützabschnitts 9 kann zwischen 4 mm und 7 mm, noch mehr bevorzugt zwischen 5 mm und 6 mm betragen.

Hinsichtlich der vorgenannten geometrischen Abmessungen sind dem Container 1 konstruktionsbedingt keine Grenzen gesetzt. Von erfindungswesentlicher Bedeutung ist allein, dass zwei Hülsenkörper vorgesehen sind, die im endmontierten Zustand im Bereich ihrer Kontaktabschnitte 5 und 6 unter Ausbildung eines Presssitzes 7 miteinander dauerhaft verbunden sind. Alle anderen Abschnitte oder Bereiche der Hülsenkörper 2 und 3 können wahlweise ausgebildet sein, je nach Größe des im bestimmungsgemäßen Verwendungsfall aufzunehmenden Implantats 15.

### Bezugszeichen

- 1: Container
- 2: erster Hülsenkörper (Innenhülse)
- 3: zweiter Hülsenkörper (Außenhülse)
- 4: Längserstreckung
- 5: Kontaktabschnitt
- 6: Kontaktabschnitt
- 7: Presssitz
- 8: Kragen
- 9: Stützabschnitt
- 10: Schulter
- 11: Hohlzylinder
- 12: Bodenabschnitt
- 13: Durchgangsöffnung
- 14: Sicke
- 15: Implantat
- 16: Kopfabschnitt
- 17: Fußabschnitt

## Patentansprüche

1. Container für die Aufbewahrung und den Transport eines dentalen Titan-Implantats, mit einem ersten Hülsenkörper (2) und einem zweiten Hülsenkörper (3), wobei die Längserstreckung (4) des zweiten Hülsenkörpers (3) die Längserstreckung (4) des ersten Hülsenkörpers (2) übersteigt,
**dadurch gekennzeichnet, dass** die beiden Hülsenkörper (2, 3) jeweils tiefgezogen und nach dem Baukastenprinzip miteinander kombiniert sind, und dass der erste Hülsenkörper (2) vom zweiten Hülsenkörper (3) zumindest zum Teil aufgenommen und mit diesem verpresst ist.

2. Container nach Anspruch 1, **dadurch gekennzeichnet, dass** die beiden Hülsenkörper (2, 3) jeweils einen Kontaktabschnitt (5, 6) bereitstellen, wobei die beiden Kontaktabschnitte (5, 6) unter Ausbildung eines Presssitzes (7) in Berührungskontakt aneinander liegen.

3. Container nach Anspruch 1 oder 2, **dadurch gekennzeichnet, dass** der erste Hülsenkörper (2) einen Kragen (8) aufweist, an dem der zweite Hülsenkörper (3) stirnseitig anliegt.

4. Container nach Anspruch 3, **dadurch gekennzeichnet, dass** der Kragen (8) einen den Außendurchmesser des zweiten Hülsenkörpers (3) übersteigenden Außendurchmesser aufweist.

5. Container nach Anspruch 2, 3 oder 4, **dadurch gekennzeichnet, dass** der erste Hülsenkörper (2) einen Stützabschnitt (9) mit einem im Vergleich zum Kontaktabschnitt (5) verminderten Außendurchmesser aufweist.

6. Container nach Anspruch 5, **dadurch gekennzeichnet, dass** der erste Hülsenkörper (2) einen als Schulter (10) ausgebildeten Übergangsabschnitt zwischen dem Kontaktabschnitt (5) und dem Stützabschnitt (9) aufweist.

7. Container nach einem der vorhergehenden Ansprüche, **dadurch gekennzeichnet, dass** der zweite Hülsenkörper (3) einen einseitig offen ausgebildeten Hohlzylinder (11) und einen den Hohlzylinder (11) anderendseitig verschließenden Bodenabschnitt (12) aufweist.

8. Container nach Anspruch 7, **dadurch gekennzeichnet, dass** der Bodenabschnitt (12) eine mittig zum Hohlzylinder (11) ausgebildete Durchgangsöffnung (13) aufweist.

9. Container nach Anspruch 7 oder 8, **dadurch gekennzeichnet, dass** der Bodenabschnitt (12) zur Durchgangsöffnung (13) beabstandete Durchgangsbohrungen aufweist.

10. Container nach Anspruch 7, 8 oder 9, **dadurch gekennzeichnet, dass** der Hohlzylinder (11) eine umlaufende Sicke (14) aufweist.

11. Container nach Anspruch 10, **dadurch gekennzeichnet, dass** in die Sicke (14) ein Ring aus einem weich-elastischen Kunststoffmaterial eingesetzt ist.

12. Container nach einem der vorhergehenden Ansprüche 7 bis 11, **dadurch gekennzeichnet, dass** der Bodenabschnitt (12) eine Verdrehsicherung zur verdrehsicheren Anordnung des Implantats (15) innerhalb des Containers bereitstellt.

13. Container nach Anspruch 12, **dadurch gekennzeichnet, dass** die Durchgangsöffnung (13) zur Ausbildung einer Verdrehsicherung umfangsseitig eine Einkerbung aufweist.

14. Container nach einem der vorhergehenden Ansprüche, **dadurch gekennzeichnet, dass** der erste Hülsenkörper (2) und der zweite Hülsenkörper (3) jeweils einstückig ausgebildet sind.

15. Container nach einem der vorhergehenden Ansprüche, **dadurch gekennzeichnet, dass** der erste Hülsenkörper (2) und der zweite Hülsenkörper (3) jeweils aus Reintitan, vorzugsweise Titan-Grad 1, gebildet sind.

## Claims

1. Container for storing and transporting a dental titanium implant,
comprising a first sleeve body (2) and a second sleeve body (3), wherein the longitudinal extension (4) of the second sleeve body (3) exceeds the longitudinal extension (4) of the first sleeve body (2),
**characterized in that** the two sleeve bodies (2, 3) are each deep-drawn and combined with each other according to the modular principle, and **in that** the first sleeve body (2) is at least partially received by the second sleeve body (3) and pressed together with the latter.

2. Container according to claim 1, **characterized in that** the two sleeve bodies (2, 3) each provide a contact section (5, 6), wherein the two contact sections (5, 6) bear against each other in tactile contact, forming a press fit (7).

3. Container according to claim 1 or 2, **characterized in that** the first sleeve body (2) has a collar (8) where the second sleeve body (3) frontally rests against.

4. Container according to claim 3, **characterized in that** the collar (8) has an outer diameter exceeding the outer diameter of the second sleeve body (3).

5. Container according to claim 2, 3 or 4, **characterized in that** the first sleeve body (2) has a support section (9) with an outer diameter that is smaller than that of the contact section (5).

6. Container according to claim 5, **characterized in that** the first sleeve body (2) has a transition section between the contact section (5) and the support section (9) designed as a shoulder (10).

7. Container according to one of the preceding claims, **characterized in that** the second sleeve body (3) has a hollow cylinder (11) open on one side and a base section (12) closing the hollow cylinder (11) on the other side.

8. Container according to claim 7, **characterized in that** the base section (12) has a through opening (13) formed centrally with respect to the hollow cylinder (11).

9. Container according to claim 7 or 8, **characterized in that** the base section (12) has through bores spaced apart from the through opening (13).

10. Container according to claim 7, 8 or 9, **characterized in that** the hollow cylinder (11) has a circumferential bead (14).

11. Container according to claim 10, **characterized in that** a ring made of a soft-elastic plastic material is inserted into the bead (14).

12. Container according to one of the preceding claims 7 to 11, **characterized in that** the base section (12) provides a twist lock for twist-proof arrangement of the implant (15) within the container.

13. Container according to claim 12, **characterized in that** the through-opening (13) has a notch on its circumference to form an anti-rotation device.

14. Container according to one of the preceding claims, **characterized in that** the first sleeve body (2) and the second sleeve body (3) are each formed in one piece.

15. Container according to one of the preceding claims, **characterized in that** the first sleeve body (2) and the second sleeve body (3) are each made of pure titanium, preferably titanium grade 1.

## Revendications

1. Récipient pour le stockage et le transport d'un implant dentaire en titane, comprenant un premier corps de manchon (2) et un deuxième corps de manchon (3), l'extension longitudinale (4) du deuxième corps de manchon (3) dépassant l'extension longitudinale (4) du premier corps de manchon (2), **caractérisé en ce que** les deux corps de manchon (2, 3) sont chacun emboutis et combinés entre eux selon le principe modulaire, et **en ce que** le premier corps de manchon (2) est au moins partiellement logé dans le deuxième corps de manchon (3) et pressé ensemble avec celui-ci.

2. Récipient selon la revendication 1, **caractérisé en ce que** les deux corps de manchon (2, 3) présentent chacun une partie de contact (5, 6), les deux parties de contact (5, 6) étant en contact l'une avec l'autre en formant un assemblage par serrage (7).

3. Récipient selon la revendication 1 ou 2, **caractérisé en ce que** le premier corps de manchon (2) présente un collet (8) contre lequel le deuxième corps de manchon (3) repose à l'avant.

4. Récipient selon la revendication 3, **caractérisé en ce que** le collet (8) présente un diamètre extérieur supérieur au diamètre extérieur du deuxième corps de manchon (3).

5. Récipient selon la revendication 2, 3 ou 4, **caractérisé en ce que** le premier corps de manchon (2) présente une partie d'appui (9) dont le diamètre extérieur est réduit par rapport à la partie de contact (5).

6. Récipient selon la revendication 5, **caractérisé en ce que** le premier corps de manchon (2) présente une partie de transition entre la partie de contact (5) et la partie d'appui (9) formée comme un épaulement (10).

7. Récipient selon l'une quelconque des revendications précédentes, **caractérisé en ce que** le deuxième corps de manchon (3) présente un cylindre creux (11) ouvert d'un côté et une partie de fond (12) fermant le cylindre creux (11) à l'autre extrémité.

8. Récipient selon la revendication 7, **caractérisé en ce que** la partie de fond (12) présente une ouverture de passage (13) formée au centre du cylindre creux (11).

9. Récipient selon la revendication 7 ou 8, **caractérisé en ce que** la partie de fond (12) présente des alésages de passage espacés de l'ouverture de passage (13).

10. Récipient selon la revendication 7, 8 ou 9, **caractérisé en ce que** le cylindre creux (11) présente un bourrelet périphérique (14).

11. Récipient selon la revendication 10, **caractérisé en ce qu'**un anneau en matière plastique souple et élastique est inséré dans le bourrelet (14).

12. Récipient selon l'une quelconque des revendications 7 à 11 précédentes, **caractérisé en ce que** la partie de fond (12) comporte un dispositif anti-rotation pour l'agencement de l'implant (15) à l'intérieur du récipient sans possibilité de rotation.

13. Récipient selon la revendication 12, **caractérisé en ce que** l'ouverture de passage (13) présente une encoche sur son pourtour pour former un dispositif anti-rotation.

14. Récipient selon l'une quelconque des revendications précédentes, **caractérisé en ce que** le premier corps de manchon (2) et le deuxième corps de manchon (3) sont chacun réalisés d'un seul tenant.

15. Récipient selon l'une quelconque des revendications précédentes, **caractérisé en ce que** le premier corps de manchon (2) et le deuxième corps de manchon (3) sont chacun formés de titane pur, de préférence du titane de grade 1.
